# EUROPÄISCHE PATENTSCHRIFT

(11) **EP 1 211 206 B1**
(45) Veröffentlichungstag und Bekanntmachung des Hinweises auf die Patenterteilung: **21.06.2006**
(21) Anmeldenummer: 01126547.7
(22) Anmeldetag: 15.11.2001
(51) Int. Cl.: B65H 23/04, B41F 13/22, G01L 5/10

(54) **Vorrichtung und Verfahren zum Messen der Bahnspannung**
Method and device for measuring the web tension
Dispositif et méthode pour mesurer la tension de la bande

(30) Priorität: 29.11.2000 US 726240
(43) Veröffentlichungstag der Anmeldung: 05.06.2002
(73) Patentinhaber: Goss International Americas, Inc., Dover, NH 03820 (US)
(72) Erfinder: Cote, Kevin Lauren, Durham, NH 03824 (US); Schroeder, Lothar John, Porthmouth, NH 03801 (US)
(74) Vertreter: Domenego, Bertrand

(56) Entgegenhaltungen:
- EP-A- 0 161 223
- EP-A- 0 869 093
- DE-A- 3 940 744
- DE-U- 9 315 076
- GB-A- 995 874
- GB-A- 1 048 175
- US-A- 5 188 028
- US-A- 5 472 127
- PATENT ABSTRACTS OF JAPAN vol. 014, no. 127 (M-0947), 9. März 1990 (1990-03-09) -& JP 01 321263 A (HITACHI LTD), 27. Dezember 1989 (1989-12-27)

## Beschreibung

Die vorliegende Erfindung betrifft eine Vorrichtung und ein Verfahren zum Messen oder Steuern einer Bahnspannung gemäss den Oberbegriffen der Ansprüche 1 und 10.

Eine solche Vorrichtung und so ein Verfahren sind z.B. aus JP 01 321263 bekannt.

Rollenrotationsdruckmaschinen bedrucken eine fortlaufende Materialbahn, z.B. aus Papier. In einem Druckwerk einer Druckmaschine wird die fortlaufende Bahn mit einem Bild bedruckt, dann wird die Bahn gefalzt und in Signaturen geschnitten. Der Vorgang des Bedruckens der Bahn mit einem Bild sowie das Falzen der Bahn erzeugt eine Spannung in der Bahn. Die richtige Spannung sollte während des Druck- und Falzvorgangs in der Bahn erhalten bleiben.

Ein Verfahren zum Messen der richtigen Spannung verwendet eine Spannungsübertragungsvorrichtung. Die bereits existierenden Spannungsübertragungsvorrichtungen sind jedoch analoge Vorrichtungen, die eine häufige Kalibrierung benötigen und leicht beschädigt werden können, wenn sie überbelastet werden. Darüber hinaus reicht die Bandbreite der vorhandenen Spannungsübertragungsvorrichtungen für einige Anwendungen nicht aus. Des Weiteren bestehen die vorhandenen Spannungsübertragungsvorrichtungen aus Spannungsmessanordnungen, die in den Enden der Spannungswalzen befestigt sind. Die Anordnungen machen einige Anwendungen, z.B. das Messen einer Bahnspannung an einer angetriebenen Walze oder eine flüssigkeitsgekühlten Walze, schwierig, kostenintensiv oder sogar unmöglich.

Es ist die Aufgabe der vorliegenden Erfindung eine Walze durch Entgegenwirken der Kraft, die aufgrund der Bahnspannung auf der Walze entsteht, zu stabilisieren. Eine zusätzliche und alternative Aufgabe der Erfindung ist es, eine einfachere Vorrichtung zum Erzeugen von Bahnspannungsinformationen von den Walzen zu schaffen. Noch eine weitere oder alternative Aufgabe der vorliegenden Erfindung ist es, eine Vorrichtung zu schaffen, die nicht nur als ein Kompensator, sondern auch als eine Spannungsmessvorrichtung in einem Bahnmessbereich dienen kann

Diese Aufgabe wird erfindungsgemäß durch die Merkmale der Ansprüche 1 und 11 gelöst. Weitere Merkmale sind in den Unteransprüchen enthalten.

Die vorliegende Erfindung schafft eine Vorrichtung zum Messen der Bahnspannung mit einer Walze zum Kontaktieren der Materialbahn, wobei die Walze eine Drehachse aufweist, die durch die Bahn in eine erste Richtung bewegbar ist, einem Antrieb, der mit der Walze verbunden ist, wobei der Antrieb dient, die Achse der Walze in eine zweite Richtung entgegen der ersten Richtung zu drängen, und einer Steuerung, die mit dem entgegenwirkenden Antrieb zum Messen der Bahnspannung verbunden ist.

Anhand der erfindungsgemäßen Walze und dem erfindungsgemäßen Antrieb kann die Bahnspannungsinformation in vorteilhafter Weise leicht und effizient ermittelt werden. Darüber hinaus ermöglicht die Steuerung der vorliegenden Erfindung, sowohl als Bandkompensator als auch als Bahnspannungsmessvorrichtung in einem gegebenen Bahnmessbereich zu dienen.

Die bewegbare Walze kann eine flüssigkeitsgekühlte Walze sein. Die flüssigkeitsgekühlte Walze verbessert in vorteilhafter Weise die Leistung beim Bedrucken der Bahn.

Vorzugsweise ist der entgegenwirkende Antrieb ein Motor. Der Motor schafft den Vorteil, dass die vorliegende Erfindung bei höheren Spannungen betrieben werden kann, ohne dass mehr Beschädigungen oder Staus auftreten.

Die Steuerung ist vorzugsweise eine elektronische Schaltung. Die Verwendung einer elektronischen Schaltung erübrigt das häufige Kalibrieren der vorliegenden Erfindung.

Die Bahnspannungsmessvorrichtung kann eine Vielzahl von Hebelarmen, eine Schwenkachse, eine Vielzahl von Riemenscheiben, einen Riemen, eine Achse des Antriebs und/oder eine Drehachse umfassen, wobei jede Vorrichtung mechanisch mit dem entgegenwirkenden Antrieb verbunden ist.

Die vorliegende Erfindung schafft auch ein Verfahren zum Messen der Spannung in einer Bahn, welches die folgenden Verfahrensschritte umfasst:
Führen einer Bahn über eine Walze mit einer Achse, wobei die Achse der Walze in eine erste Richtung bewegbar ist;
Entgegenwirken der Bewegung der Achse in eine zweite Richtung entgegen der ersten Richtung; und
Messen einer entgegenwirkenden Kraft oder einer Variablen, um die Bahnspannung zu bestimmen.

Die Walze kann bei dem Verfahren zum Messen der Spannung in der Bahn ortsfest bleiben. Diese Tatsache erleichtert es in vorteilhafter Weise, Informationen über die Bahnspannung zu erhalten.

In einer bevorzugten Ausführungsform der Erfindung kann die Walze um eine Schwenkachse drehbar in einem Hebel oder Hebelarm angeordnet sein, wobei ein Bahnkompensatoralgorithmus die erwünschte Position der Walze bestimmt. Die Drehung um die Schwenkachse schafft den Vorteil, dass die Walze die Spannungsmessfunktion und die Funktion als Bahn- oder Bandkompensator ausführen kann.

Die Erfindung wird nachfolgend mit Bezug auf die Zeichnungen anhand bevorzugter Ausführungsformen beschrieben.

Es zeigen:
- Fig. 1: eine schematische Seitenansicht der Bahnspannungsmessvorrichtung mit einer Bahn;
- Fig. 2: eine schematische Frontansicht der Bahnspannungsmessvorrichtung mit dem entgegenwirkenden Antrieb und dem zweiten Hebelarm.

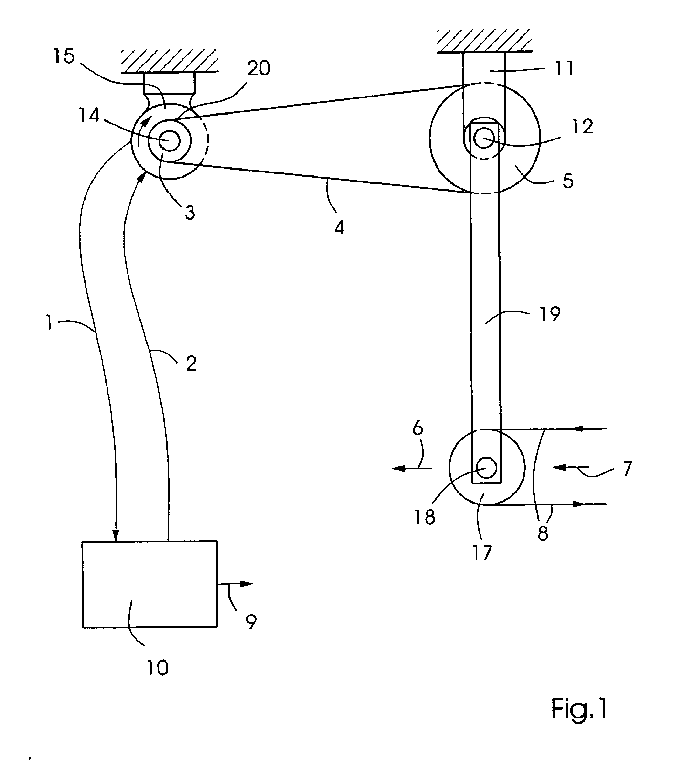

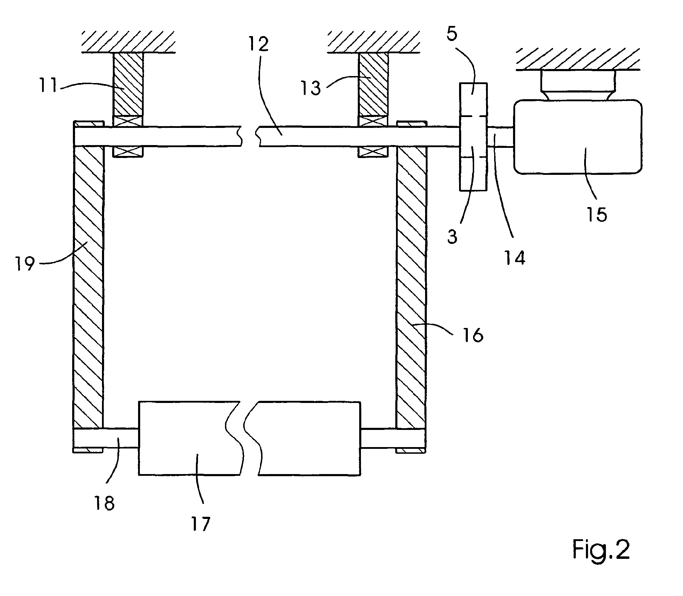

Fig. 1 zeigt eine schematische Ansicht der Bahnspannungsmessvorrichtung mit einer Bahn 8, die über eine Walze 17 bewegt wird. Die Walze 17 weist eine Achse oder Drehachse 18 auf. Der Betrieb der Duckmaschine führt dazu, dass die Spannung in der Bahn 8 eine Verdrängungskraft in eine erste Richtung 7 auf die bewegbare Walze 17 ausübt. Die Walzenachse 18 der bewegbaren Walze 17, die eine mit einer Flüssigkeit gekühlte oder eine angetriebene Walze sein kann, wird daher in die Richtung 7 gedrängt. Die Walzenachse 18 übt ihrerseits eine Kraft auf einen ersten Hebelarm 19 und einen zweiten Hebelarm 16 (s. Fig. 2) aus, die beide fest mit einer Schwenkachse 12 verbunden sind. Der erste und der zweite Hebelarm 19, 16 schaffen so ein Drehmoment in der Schwenkachse 12. Die Schwenkachse 12, die in einem ersten Befestigungselement 11 und einem zweiten Befestigungselement 13 (s. Fig. 2) befestigt ist, gibt dieses Drehmoment an eine erste Riemenscheibe 5 weiter. Die erste Riemenscheibe 5 überträgt das Drehmoment mittels eines Riemens 4 auf eine zweite Riemenscheibe 3, wobei der Riemen 4 vorzugsweise eine gezahnte innere Oberfläche aufweist. Die Drehung der zweiten Riemenscheibe 3 überträgt das Drehmoment durch eine feste Verbindung mit der Drehachse 14 des entgegenwirkenden Antriebs auf dieselbe. Die Drehachse 14 des entgegenwirkenden Antriebs ist mit dem Antrieb 15, z.B. einem Motor, verbunden und überträgt so das Drehmoment auf den Antrieb 15.

Wie nachfolgend beschrieben schafft der Antrieb 15, der von der Steuerung 10 gesteuert wird, ein genau entgegengesetztes Drehmoment zu der Drehachse 14, so dass sich die Achse 14 nicht bewegt. Die Steuerung 10 gibt ein Nullpositionssignal an den Antrieb 15 aus, so dass der Antrieb 15 dem Drehmoment, das von der Achse 14 des Antriebs ausgeht, entgegenwirkt, wobei das Drehmoment 20 des Antriebs dem Drehmoment, das von der Achse 14 des Antriebs ausgeht, entgegenwirkt. Somit stabilisiert das Drehmoment 20 des Antriebs die Achse 14 des Antriebs. Die Achse 14 des Antriebs verhindert ihrerseits die Drehung der zweiten Riemenscheibe 3, die die Drehung der ersten Riemenscheibe 5 mittels des Riemens 4 verhindert. Die erste Riemenscheibe 5 verhindert die Drehung der Schwenkachse 12, und die Schwenkachse 12 stabilisiert ihrerseits den ersten und den zweiten Hebelarm 19, 16. Der erste und der zweite Hebelarm 19, 16 stabilisieren die bewegbare Walze 17, so dass die Achse 18 ortsfest bleibt. Die bewegbare Walze 17 übt eine zweite Auslenkungskraft in eine zweite Richtung 6 aus, die gleich und entgegen der ersten Auslenkungskraft, die von der Spannung in der Bahn 8 ausgeht, wirkt.

Die Steuerung 10, die eine elektronische Schaltung sein kann oder ein Mikroprozessor, liest einen Wert, der durch eine erste Verbindung 1 das Drehmoment 20 auf den Motor 15 oder die Achse 14 wiedergibt. Die Steuerung sendet dann einen Null-Befehl mittels einer zweiten Verbindung 2 an den Antrieb 15, z.B. einen Motor, der bewirkt, dass der Antrieb 15 die Nullposition beibehält, so dass sich die Achse 14 nicht dreht. Die Steuerung 10 konvertiert dann den über die Verbindung 1 gesandten Wert, der das Drehmoment 20 des Antriebs wiedergibt, in eine Messung der Bahnspannung in Abhängigkeit von der Länge des ersten und zweiten Hebelarms 19, 16, des Durchmessers der bewegbaren Walze 17 und des Verhältnisses der ersten Riemenscheibe 5 zur zweiten Riemenscheibe 3. Die Steuerung 10 gibt die Messung der Bahnspannung als ein digitales Signal 9 aus.

Fig. 2 zeigt eine schematische Frontansicht der Bahnspannungsmessvorrichtung, die den Antrieb 15 und den zweiten Hebelarm 16 zeigt. Die bewegliche Walze 17 ist fest an Drehachse 18 angebracht, und die Drehachse 18 ist an dem ersten und zweiten Hebelarm 19, 16 befestigt und kann sich in diesen drehen. Ebenso ist die Schwenkachse 12 gezeigt, die fest mit dem ersten und zweiten Hebelarm 19, 16 verbunden und an dem ersten und zweiten Befestigungselement 11, 13 angebracht ist. Die Schwenkachse 12, die sich frei in dem ersten und zweiten Befestigungselement 11, 13 dreht, ist fest mit der ersten Riemenscheibe 5 verbunden. Der Riemen 4 schafft eine Verbindung zwischen der ersten Riemenscheibe 5 und der zweiten Riemenscheibe 3 (s. Fig. 1). Die zweite Riemenscheibe 3 ist fest mit der Achse 14 des Antriebs verbunden, die mit dem Antrieb 15 verbunden ist.

In einer anderen Ausführungsform kann die Steuerung 10 über die erste Verbindung 1 einen Positionsbefehl an den Antrieb 15 schicken. Der Positionsbefehl, der auf einer gewünschten Veränderung in der Position der bewegbaren Walze 17 beruht, wie sie bei einer normalen Kompensationsberechnung bestimmt wird, führt zu einer Veränderung des Drehmoments 20 des Antriebs 15, so dass die Veränderung des Drehmoments den ersten und zweiten Hebelarm 19, 16 dazu bringt, sich um die Schwenkachse 12 zu drehen und damit der bewegbaren Walze 17 ermöglicht sich zu bewegen. Der Antrieb 15 stellt das Drehmoment 20 des Antriebs dann ein, indem er das zur Beschleunigung der mechanischen Teile der vorliegenden Erfindung notwendige Drehmoment von dem Drehmoment 20 des Antriebs abzieht und so das Drehmoment 20 des Antriebs wieder gleich des von der Bahnspannung verursachten Drehmoments setzt. Die Vorrichtung kann so als ein Bahnspannungskompensator dienen.

Der Antrieb 15 ist vorzugsweise ein Elektromotor mit einer Welle.

### Liste der Bezugszeichen

- 1: erste Verbindung
- 2: zweite Verbindung
- 3: zweite Riemenscheibe
- 4: Riemen
- 5: erste Riemenscheibe
- 6: zweite Richtung
- 7: erste Richtung
- 8: Bahn
- 9: digitales Signal
- 10: Steuerung
- 11: erstes Befestigungselement
- 12: Schwenkachse
- 13: zweites Befestigungselement
- 14: Drehachse
- 15: Antrieb
- 16: zweiter Hebelarm
- 17: Walze
- 18: Drehachse
- 19: erster Hebelarm
- 20: Drehmoment

## Patentansprüche

1. Eine Bahnspannungsmessvorrichtung mit:
einer Walze (17) zum Kontakricren einer Materialbahn (8), wobei die Walze (17) eine Drehachse (18) aufweist, die durch die Bahn (8) in eine erste Richtung (7) bewegbar ist;
einem Antrieb (15), der mit der Walze (17) verbunden ist, wobei der Antrieb (15) dazu dient, die Walze (17) in eine zweite Richtung (6) entgegen der ersten Richtung (7) auszulenken; und
einer Steuerung (10), die mit dem Antrieb (15) verbunden ist, um die Bahnspannung zu messen, **dadurch gekennzeichnet, dass** die Steuerung (10) den Antrieb (15) der Walze (17) so ansteuert, dass die Drehachse (18) beim Messen der Bahnspannung ortsfest bleibt und **dadurch**, dass die Bahnspannung **dadurch** gemessen wird indem die Steuerung (10) einen Wert liest, der das Drehmoment (20) auf den Antrieb (15) wiedergibt und dass die Steuerung (10) den gemessenen Wert (20) in die Messung der Bahnspannung konvertiert.

2. Bahnspannungsmessvorrichtung nach Anspruch 1,
**dadurch gekennzeichnet,**
**dass** die Walze (17) eine flüssigkeitsgekühlte Walze ist.

3. Bahnspannungsmessvorrichtung nach Anspruch 1 oder 2,
**dadurch gekennzeichnet,**
**dass** der Antrieb (15) ein Motor ist.

4. Bahnspannungsmessvorrichtung nach einem der vorhergehenden Ansprüche,
**dadurch gekennzeichnet,**
**dass** die Steuerung (10) eine elektronische Schaltung ist.

5. Bahnspannungsmessvorrichtung nach einem der vorhergehenden Ansprüche,
**dadurch gekennzeichnet,**
**dass** die Vorrichtung des Weiteren eine Vielzahl von Hebelarmen (16, 19) umfasst, wobei jeder Hebelarm (16, 19) mechanisch mit dem Antrieb (15) verbunden ist, wobei die Vielzahl von Hebelarmen (16, 19) die Walze (17) trägt.

6. Bahnspannungsmessvorrichtung nach einem der vorhergehenden Ansprüche,
**dadurch gekennzeichnet,**
**dass** die Vorrichtung des Weiteren eine Schwenkachse (12) umfasst, die mechanisch mit dem Antrieb (15) verbunden ist.

7. Bahnspannungsmessvorrichtung nach einem der vorhergehenden Ansprüche,
**dadurch gekennzeichnet,**
**dass** die Vorrichtung des Weiteren eine Vielzahl von Riemenscheiben (3, 5) umfasst, wobei jede Riemenscheibe (3, 5) mechanisch mit dem Antrieb (15) verbunden ist.

8. Bahnspannungsmessvorrichtung nach einem der vorhergehenden Ansprüche,
**dadurch gekennzeichnet,**
**dass** die Vorrichtung des Weiteren einen Riemen (4) umfasst, der mit mindestens einer der Riemenscheiben (3, 5) verbunden ist.

9. Bahnspannungsmessvorrichtung nach einem der vorhergehenden Ansprüche,
**dadurch gekennzeichnet,**
**dass** der Antrieb (15) eine Achse (14) aufweist.

10. Druckmaschine,
**dadurch gekennzeichnet,**
**dass** sie eine Vorrichtung nach einem der vorhergehenden Ansprüche aufweist.

11. Verfahren zum Messen der Spannung in einer Bahn, welches die folgenden Verfahrensschritte umfasst:
Führen einer Bahn (8) über eine Walze (17), wobei die Walze (17) eine in eine erste Richtung (7) bewegbare Achse (18) aufweist;
Entgegenwirken der Bewegung der Achse (18) in eine zweite Richtung (6) entgegen der ersten Richtung (7); und
Messen einer entgegenwirkenden Kraft oder einer Variablen, um eine Bahnspannung bestimmen zu können,
**dadurch gekennzeichnet,**
**dass** die Achse (18) der Walze (17) ortsfest bleibt und **dadurch**,
**dass** die Bahnspannung **dadurch** gemessen wird, indem eine Steuerung (10) einen Wert liest, der die Kraft oder die Variable wiedergibt und dass die Steuerung (10) den gemessenen Wert (20) in die Messung der Bahnspannung konvertiert.

12. Verfahren zum Messen der Spannung nach Anspruch 11,
**dadurch gekennzeichnet,**
**dass** die Walze (17) in einem Hebel oder Hebelarm (16, 19) um eine Schwenkachse (12) drehbar ist .

13. Verfahren zum Messen der Spannung nach Anspruch 12,
**dadurch gekennzeichnet,**
**dass** das Verfahren des Weiteren den Schritt des Bewegens der Achse (18) der Walze (17) basierend auf einem Bahnkompensationsalgorithmus umfasst.

## Claims

1. Device for measuring a web tension with
a roller (17) for contacting a material web (8), wherein the roller (17) provides a rotational axis (18), which can be moved by the web (8) in a first direction (7);
with a drive (15), which is connected to the roller (17), wherein the drive (15) is used to displace the roller (17) in a second direction (6) contrary to the first direction (7); and
with a control unit (10), which is connected to the drive (15), in order to measure the web tension,
**characterised in that**
the control unit (10) controls the drive (15) of the roller (17) in such a manner that the rotational axis (18) remains fixed in position during the measurement of the web tension, and the web tension is measured **in that** the control unit (10) reads a value, which reproduces the torque (20) on the drive (15) and that the control unit (10) converts the measured value (20) into the measurement of the web tension.

2. Device for measuring the web tension according to claim 1,
**characterised in that**
the roller (17) is a liquid-cooled roller.

3. Device for measuring the web tension according to claim 1 or 2,
**characterised in that**
the drive (15) is a motor.

4. Device for measuring the web tension according to any one of the preceding claims,
**characterised in that**
the control unit (10) is an electronic circuit.

5. Device for measuring the web tension according to any one of the preceding claims,
**characterised in that**
the device also comprises a plurality of lever arms (16, 19), each lever arm (16, 19) being mechanically connected to the drive (15), and the plurality of lever arms (16, 19) bearing the roller (17).

6. Device for measuring the web tension according to any one of the preceding claims,
**characterised in that**
the device also comprises a swivelling axis (12), which is mechanically connected to the drive (15).

7. Device for measuring the web tension according to any one of the preceding claims,
**characterised in that**
the device also comprises a plurality of belt pulleys (3, 5), each belt pulley (3, 5) being mechanically connected to the drive (15).

8. Device for measuring the web tension according to any one of the preceding claims,
**characterised in that**
the device also comprises a belt (4), which is connected to at least one of the belt pulleys (3, 5).

9. Device for measuring the web tension according to any one of the preceding claims,
**characterised in that**
the drive (15) has an axis (14).

10. Printing machine,
**characterised in that**
it comprises a device according to any one of the preceding claims.

11. Method for measuring the web tension comprising the following procedural stages:
- guiding a web (8) over a roller (17), wherein the roller (17) has an axis (18), which can be moved in a first direction (7);
- counteracting the movement of the axis (18) in a second direction (6) contrary to the first direction (7); and
- measuring a counteracting force or a variable, in order to determine a web tension,
**characterised in that**
the axis (18) of the roller (17) remains fixed in position, and the web tension is measured **in that** a control unit (10) reads a value, which reproduces the force or the variable, and that the control unit (10) converts the measured value (20) into the measurement of the web tension.

12. Method for measuring the tension according to claim 11,
**characterised in that**
the roller (17), in a lever or lever arm (16, 19), is rotatable about a swivelling axis (12).

13. Method for measuring the tension according to claim 12,
**characterised in that**
the method also comprises the stage of moving the axis (18) of the roller (17) on the basis of a web-compensation algorithm.

## Revendications

1. Dispositif pour mesurer la tension d'une bande comprenant :
un cylindre (17) destiné à être en contact avec une bande de matériau (8), le cylindre (17) comprenant un axe de rotation (18), qui peut être déplacé par la bande (8) dans un premier sens (7) ;
un entraînement (15), qui est relié au cylindre (17), l'entraînement (15) servant à dévier le cylindre (17) dans un second sens (6) opposé au premier sens (7) ; et
une commande (10), qui est reliée à l'entraînement (15), afin de mesurer la tension de la bande, **caractérisé en ce que** la commande (10) commande l'entraînement (15) du cylindre (17), de sorte que l'axe de rotation (18) reste fixe à la mesure de la tension de la bande et **caractérisé en ce que** la tension de la bande est mesurée par le fait que la commande (10) lit une valeur, qui reproduit le couple de rotation (20) sur l'entraînement (15) et que la commande (10) convertit la valeur mesurée (20) en mesure de la tension de la bande.

2. Dispositif pour mesurer la tension d'une bande selon la revendication 1,
**caractérisé en ce que**
le cylindre (17) est un cylindre refroidi par un liquide.

3. Dispositif pour mesurer la tension d'une bande selon la revendication 1 ou 2,
**caractérisé en ce que**
l'entraînement (15) est un moteur.

4. Dispositif pour mesurer la tension d'une bande selon l'une quelconque des revendications précédentes,
**caractérisé en ce que**
la commande (10) est un circuit électronique.

5. Dispositif pour mesurer la tension d'une bande selon l'une quelconque des revendications précédentes,
**caractérisé en ce que**
le dispositif comporte en outre une pluralité de bras de levier (16, 19), chaque bras de levier (16, 19) étant relié mécaniquement à l'entraînement (15), la pluralité de bras de levier (16, 19) portant le cylindre (17).

6. Dispositif pour mesurer la tension d'une bande selon l'une quelconque des revendications précédentes,
**caractérisé en ce que**
le dispositif comporte en outre un axe de pivotement (12), qui est relié mécaniquement à l'entraînement (15).

7. Dispositif pour mesurer la tension d'une bande selon l'une quelconque des revendications précédentes,
**caractérisé en ce que**
le dispositif comporte en outre une pluralité de poulies à courroie (3, 5), chaque poulie à courroie (3, 5) étant reliée mécaniquement à l'entraînement (15).

8. Dispositif pour mesurer la tension d'une bande selon l'une quelconque des revendications précédentes,
**caractérisé en ce que**,
le dispositif comporte en outre une courroie (4) qui est reliée à au moins une des poulies à courroie (3, 5).

9. Dispositif pour mesurer la tension d'une bande selon l'une quelconque des revendications précédentes,
**caractérisé en ce que**
l'entraînement (15) comprend un axe (14).

10. Machine à imprimer,
**caractérisée en ce que**
elle comprend un dispositif selon l'une quelconque des revendications précédentes.

11. Procédé pour mesurer la tension dans une bande, lequel comporte les étapes de procédé suivantes :
guidage d'une bande (8) par dessus un cylindre (17), le cylindre (17) comprenant un axe (18) mobile dans un premier sens (7) ;
opposition au déplacement de l'axe (18) dans un second sens (6) opposé au premier sens (7) ; et
mesure d'une force opposée ou d'une variable, afin de pouvoir définir une tension de la bande,
**caractérisé en ce que**
l'axe (18) du cylindre (17) reste fixe et **en ce que**
la tension de la bande est mesurée par le fait qu'une commande (10) lit une valeur, qui reproduit la force ou la variable et que la commande (10) convertit la valeur mesurée (20) en mesure de la tension de la bande.

12. Procédé de mesure de la tension selon l'une quelconque des revendications précédentes 11,
**caractérisé en ce que**
le cylindre (17) dans un levier ou un bras de levier (16, 19) peut être amené en rotation autour d'un axe de pivotement (12).

13. Procédé pour la mesure de la tension selon la revendication 12,
**caractérisé en ce que**,
le procédé comporte en outre l'étape de déplacement de l'axe (18) du cylindre (17) en se basant sur un algorithme de compensation de bande.
